Europäisches Patentamt

European Patent Office

Office européen des brevets

(11) Veröffentlichungsnummer: **0 608 544 A2**

# EUROPÄISCHE PATENTANMELDUNG

(21) Anmeldenummer: **93120483.8**

(51) Int. Cl.⁵: **G01N 21/86**

(22) Anmeldetag: **18.12.93**

(30) Priorität: **27.01.93 DE 4302137**

(43) Veröffentlichungstag der Anmeldung:
**03.08.94 Patentblatt 94/31**

(84) Benannte Vertragsstaaten:
**AT DE FR GB IT**

(71) Anmelder: **Grosse, Werner**
**Hohenaspen 14**
**D-69231 Rauenberg(DE)**

(72) Erfinder: **Grosse, Werner**
**Hohenaspen 14**
**D-69231 Rauenberg(DE)**

(74) Vertreter: **Naumann, Ulrich**
**Patentanwälte**
**Ullrich & Naumann,**
**Gaisbergstrasse 3**
**D-69115 Heidelberg (DE)**

(54) Verfahren und Vorrichtung zur optischen Porositätsmessung an einer laufenden Bahn.

(57) Bei der Herstellung von gas- oder wasserdurchlässigen, breitbahnigen Materialien wie: Zigaretten-, Mundstückbelag-, Kaffeefilter-, Teefilter- oder Verpackungspapiere, soft- oder hard-structurs, veredelte Kunststoffolien, Vliese und Tissues ist eine on-line Porositätserfassung unerläßlich. Üblicherweise werden hierbei aufwendige beidseitig traversierende, optoelektronische Meßsysteme eingesetzt, die häufig auch andere materialspezifische Parameter wie: Bahndicke, Dichte, Flächengewicht, Strukturformation usw. ausweisen. Stark verfaserte und somit optisch sehr dichte Bahnmaterialien lassen sich nach den bisher bekannten Verfahren nur sehr schwierig, außerordentlich ungenau oder gar nicht reproduzierbar erfassen.

Das erfinderische Verfahren mit seinen Vorrichtungen ermöglicht es, die Porosität auch von optisch sehr dichten Bahnmaterialien mit genügend großer Auflösung und Reproduktion optoelektronisch und on-line zu messen. Hierzu befindet sich auf der einen Bahn-Seite eine festaufgebaute, Bahnbreitenabdeckende, duale Lichtquelleneinrichtung 2, die zwei Reihen von vielzahligen Einzellichtkreisflächen 14 auf die laufende Bahn 1 projiziert. Auf der anderen Bahnseite traversiert ein dualer Porositätsmeßkopf 3 und detektiert die durch die laufende Bahn 1 hindurchtretenden Lichtquanten eines jeden dieser Lichtkreise 14 beider optischer X-Achsen 22 und 23 im Überlappungsmodus. Durch die Kombination von optischer Transmissions- und Streulichterfassung werden deren Lichtanteile.

Fig. 2

EP 0 608 544 A2

Die Erfindung hat ein Verfahren und deren Vorrichtung gemäß dem Oberbegriff des Patentanspruches 1 zum Gegenstand, mit der auf optoelektronischem Wege die Porosität on-line an laufenden Bahnen gemessen werden kann.

Unter dem Begriff "laufende Bahnen" sind optische, im sichtbaren Wellenbereich durchlässige, und bis zu 4000 mm breite Bahnmaterialien wie: Zigaretten-, Mundstückbelag-, Kaffeefilter-, Teefilter- oder Verpackungspapiere, soft- oder hardstructures, veredelte Kunststoffolien sowie Vliese und Tissues zu verstehen, die bestimmte Gas- oder Wasserdurchlässigkeitswerte aufweisen sollen. Das physikalische Maß der Gas-, oder wie in den meisten industriellen Anwendungsfällen, für die Luftdurchlässigkeit ist die Porosität. Diese Porositäten können einerseits gleichmäßig über die gesamte Bahnbreite als Flächenporosität verteilt sein, wie auch in Form von Zonen oder Linien eine feste lokale Position in Bahnlaufrichtung einnehmen.

Mit verschiedenen statischen Meßgeräten wird bei einem konstanten Vordruck der Gasdurchsatz (CORESTA, FRANKGEFÄT, BORGWALDT) oder bei einem konstanten Durchfluß die Druckdifferenz (FILTRONA) gegenüber der Umgebung gemessen und so die Porosität des Materials über eine definierte Meßfläche (1 cm$^2$, 4 cm$^2$ oder m$^2$) bestimmt. Für die optoelektronische, also indirekte Porositätsmeßwerterfassung, findet in der Verfahrensanwendung dann eine vorherige Zuordnung zur pneumatischen Gas- oder auch Wasserdurchlässigkeit statt.

Die Porositätsmeßbereiche des erfinderischen Verfahrens und deren Vorrichtung liegen hierbei innerhalb der Bereiche von 10-5000 CU bei 1 cm$^3$/min/cm$^2$/-100 mmWs nach CORESTA und 1-500 Ltr./m$^2$/sek. -20 mmWS nach dem Frankmeßsystem.

Bei der Herstellung oder Veredelung von luftdurchlässigen Materialbahnen, die in Bahnbreiten bis 4000 mm ausgeführt und mit Bahngeschwindigkeiten bis zu 1500 m/min laufen, ist eine on-line Porositätsmessung unabdingbar, da die Porosität ein wichtiges Qualitätskriterium ist und einer permanenten Überwachung oder Nachregelung unterliegt. Des weiteren sind diese Herstellungs- oder Veredelungsmaschinen hochautomatisiert, so daß für die Porositätsmessung eine on-line Prozeßautomationseinbindung unerläßlich ist. Materialfehler, starke Porositätsabweichungen, Driftungen usw., die sowohl in der Bahnbreite wie auch in Laufrichtung auftreten können, müssen ohne zeitliche Verzüge zur Ausweisung kommen. Letztlich benötigt der Anlagenbetreiber zu jedem Rollenende ein Porositätszertifikat seines Bahnmaterials.

Verfahren und Vorrichtungen zur direkten pneumatischen Messung der Porosität an laufenden Bahnen sind seit Jahren bekannt und bspw. in der WO 87/030.89, WO 84/045.93 und US-PS 34 66 925 beschrieben. Hierbei beziehen sich die Ausführungen auf hochporöse Filterpapiere oder Gewebebahnen, wobei die Porosität lokal mit einem speziellen Meßkopfsystem gemessen wird.

Optoelektronische, stationäre Verfahren, wie sie unter der EP 0 056 223 und DE 28 04 975 angemeldet sind, haben die lokale Porositätsmessung in Form einer optischen Transmissionsmessung von schmalen zonenperforierten Zigaretten- und Mundstückbelagpapierbahnen zum Gegenstand.

Darüber hinaus ist aus der DE 36 18 518 und weiterer Anmeldungen innerhalb der IPC G01N 15/08 bekannt, daß zu beiden Seiten der Bahn synchrontraversierend geführte optoelektronische Meßkopfsysteme wie auch beidseitig stationäre, über die gesamte Bahnbreite durchgehende Lichtwellenleiterzuführungs- und Detektionseinrichtungen von der im Meßspalt durchlaufenden Bahn die Porosität im Transmissionsmodus aufnehmen und konvertieren können.

Sehr häufig ist mit diesen hochtechnisierten Einrichtungen die Bildung anderer physikalischer Bahnmaterialgrößen wie: Dicke, Dichte, Flächengewicht, Formationen, Strukturen usw. verbunden.

Des weiteren beschreibt der Fachaufsatz: Online-Porositätsmessung mit Laserstrahlen an leichtgewichtigen Hygienepapieren von Herrn Dr. Hardwig die Einsatzmöglichkeiten des industriell weit verbreiteten Lippke-Systems, welches mittels beidseitiger Traversiersysteme und eines Halbleiterlasers einen 120 $\mu$m kleinen Strahldurchmesser auf die laufende Bahn projiziert. Durch die Porenstruktur und Bahnbewegung wird das durchstrahlte, monochromatische Licht in seiner Intensität moduliert und von einer Fotodiode detektiert. Unter Berücksichtigung der Betrachtungszeiträume und eines mathematischen Modells erfolgt dann die eigentliche Porositätswertbildung.

Viele dieser Verfahren haben die Gemeinsamkeit, daß die beiden optischen X- und Y-Achsen der Lichtquelleneinrichtung auf der einen Bahnseite und der Detektor auf der anderen Bahnseite zum Meßzeitpunkt in deren Kreuzungspunkt liegen müssen. Dies ist letztlich das Grundprinzip dieser Meßanordnungen.

Darüber hinaus sind die Investitionskosten für beidseitige Traversiersysteme mit ihren mechanisch aufwendigen und verwindungssteifen Aufnahmerahmen exorbitant hoch.

Des weiteren können durch materialspezifische Änderungen wie: Materialdicke, Gewicht und Dichte, Faserung, Farbpigmentierung, Oberflächenbeschaffenheit sowie Art und Ausführung der Porigkeit starke Meßwertabweichungen von der zuvor zugeordneten Luft- oder Wasserdurchlässigkeit auftreten, die eine Neukalibrierung der Systeme notwendig machen. Dies zeigen die industriellen Praxiserfahrungen sehr deutlich.

Außerdem lassen sich die Porositäten einiger optisch sehr dichten und porösen Bahnmaterialien nach den bisher bekannten Verfahren und Vorrichtungen der optoelektronischen Transmissionsmethode nur sehr schwierig, außerordentlich ungenau oder nicht reproduzierbar erfassen.

Bei einigen konventionellen optischen Porositätsmeßverfahren werden die optischen Porositätswerte zur tatsächlichen Gas- bzw. Wasserdurchlässigkeit nach folgender Gleichung berechnet:

$$X_{pneu} = a + b^{XoPt},$$

wobei a den Anfangspunkt und b die Steigung der Exponentialfunktion bestimmt.

Mit einer Änderung der Lochgröße und gleichbleibender Gesamtporositätslochflächebleibt in erster Näherung der optische Porositätswert konstant, während die pneumatische Gasdurchlässigkeit nach dem Hagen-Poisenilleschen Gesetz exponentiell ansteigt. Eine starke Änderung der zuvor genannten materialspezifischen Parameter kann hier zu einer Steigungsänderung des zuvor zugeordneten Funktionsverlaufs aus einer Kurvenschar führen.

Die fundamentalen Gründe hierfür basieren auf den extrem starken Lichtstrahlenwegumlenkungen und der damit verbundenen geringen Lichtquantenausbeute beim Material-pathing durch die eigentlichen Poren gegenüber dem restlichen Materialuntergrund, welche durch die starken Verfaserungen und nicht direkten Porendurchlässe verursacht werden. Untersuchungen und Versuchsdurchführungen mit unterschiedlich dichten und gleichporösen Materialien bestätigen dies.

Das Ziel der vorliegenden Erfindung besteht nun darin, ein optoelektronisches Porositätsmeßssystem der eingangs genannten Gattung zu schaffen, mit deren Verfahren und Vorrichtung an laufenden Bahnen die Porositäten auch von optisch sehr dichten und porösen Materialien reproduzierbar und mit genügend grober Genauigkeit on-line gemessen werden kann. Dies für Porositäten innerhalb der eingangs genannten Bandbreite und für Bahnmaterialien in völliger Unabhängigkeit von deren Materialbeschaffenheit und Zusammensetzung.

Diese Aufgabe wird grundsätzlich durch das Kennzeichen des Hauptanspruches 1 bei einem entsprechenden Verfahren und durch das Kennzeichen des Oberanspruches 11 bei der entsprechenden Vorrichtung gelöst.

Erfindungsgemäß erfolgt eine optische Transmissionsmessung zur Ermittlung der Bahnporosität in der Weise, daß durch eine die gesamte Bahnbreite abdeckende, stationär angeordnete Lichtquelleneinrichtung zwei in Laufrichtung versetzte Lichtkreisreihen auf die laufende Bahn projiziert werden. Auf der anderen Bahnseite traversiert ein optischer Porositätsmeßkopf zu diesen beiden quer zur Bahn verlaufenden, und in Laufrichtung versetzten optischen X-Achsen. Während des Traversierungsprozesses erfolgt eine räumlich überlappende Transmissions- und Streulichtaufnahme der zweireihigen Lichtkreise, ohne daß der Porositätsmeßkopf zur Meßwertaufnahme für einen Augenblick verweilt.

In dieser vorteilhaften Weise werden so alle einzelnen Lichtkreisflächen beider Reihen mit linearer Traversiergeschwindigkeit zyklisch abgetastet und die achsfernen Streustrahlungsanteile durch die optische X-Achsenverschiebung des Detektorteiles zur stehenden Lichtquelle eingefangen.

Die sich hieraus ergebenden Funktionsverläufe weisen die einzelnen Lichtanteile nach Betrag und geometrischer Verteilung aus und ermöglichen mit dem sich anschließenden Meßwerterfassungssystem eine direkte Zuordnung zur Bahnporosität. Und dies völlig unabhängig von der Materialzusammensetzung und auch bei optisch sehr dichten Bahnmaterialien mit genügend großer Auflösung und Reproduzierbarkeit.

Im weiteren wird die gegenständliche Erfindung mit den aufgeführten Zeichnungen und Diagrammen in seiner Verfahrensweise und Vorrichtungsausführung näher erläutert. Hierbei zeigt

Fig. 1     eine Seitenansicht der am Maschinenrahmen festaufgebauten Lichtquelleneinrichtung und das sich auf der anderen Bahnseite befindliche Traversiersystem mit dem aufgesetzten Porositätsmeßkopf,

Fig. 2     eine Frontansicht der gesamten Porositätsmeßvorrichtung über die Bahnbreite,

Fig. 3     eine Frontansicht der Lichtquellenvorrichtung mit Auszugsvergrößerung der Lochblenden zur Überlappungsverdeutlichung der Lichtkreisreihen,

Fig. 4     eine Schnittzeichnung des Porositätsmeßkopfes, deren optischen Aufbau und Einbaukomponenten,

Fig. 5     ein Diagramm zur Veranschaulichung der Meßproblematik bei optisch dichten Bahnmaterialien,

Fig. 6     ein Diagramm der optischen Transmissionsmessung, welche durch die X-Achsen-Traversierung einer Lichtkreisfläche in Form eines charakteristischen Funktionsverlaufes gemäß den Lichtanteilen und geometrischer Verteilung entsteht,

Fig. 7     ein Diagramm mit gleicher Darstellung für optisch sehr dichte Bahnmaterialien,

Fig. 8     ein Diagramm mit durchgeführter Porositätsflächenintegration der aus Fig.

5 und 6 dargestellten Funktionsverläufe am Beispiel von 5 hochporösen und dichten unterschiedlichen Papieren,

Fig. 9   ein Diagramm mit der Gegenüberstellung der tatsächlichen zur optoelektronisch in der erfinderischen Weise konvertierten Porositätswerte.

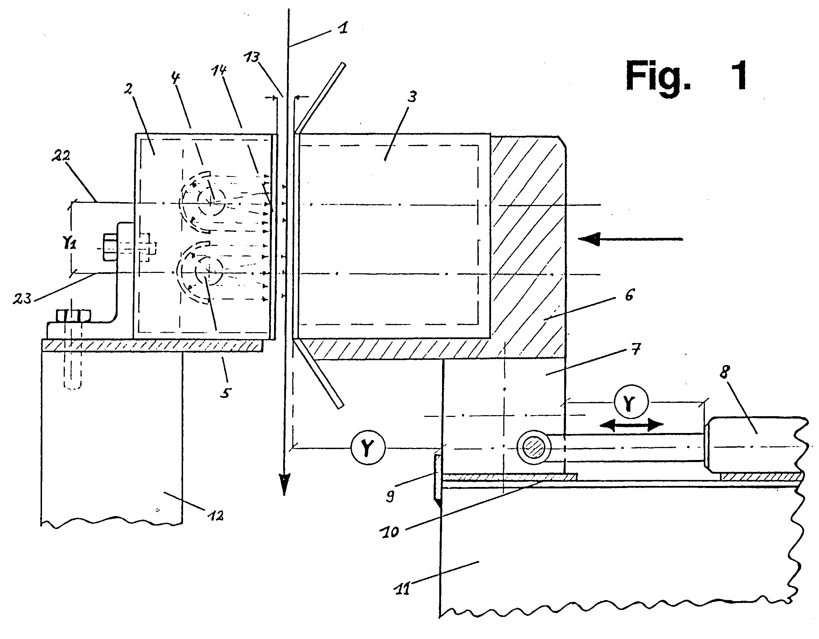

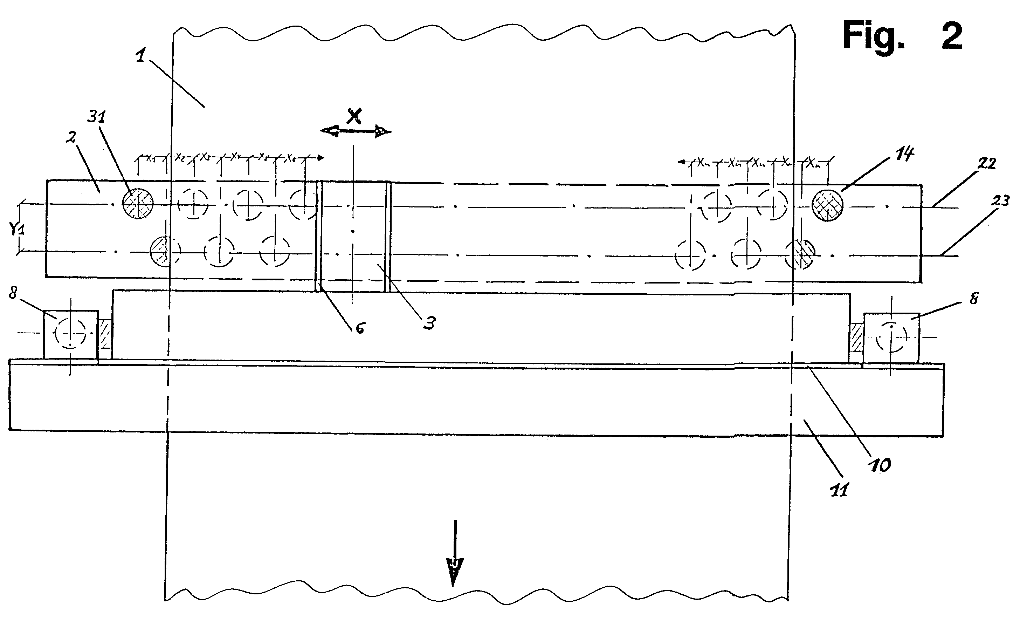

Die Vorrichtung nach Fig. 1 und Fig. 2 besteht im wesentlichen aus den Komponenten der stationären, bahnbreiten Lichtquelleneinrichtung 2 auf der einen Bahnseite und dem quer über die Bahnbreite traversierenden Porositätsmeßkopf 3 auf der anderen Bahnseite, in deren Meßspalt 13 die zu messende Materialbahn 1 durchgeführt ist. Der Porositätsmeßkopf 3 ist mit einem Haltewinkel 6 auf dem X-Achsen-Traversiersystem 7 aufgebaut und am Maschinenrahmen 11 befestigt. Damit zur Bahneinführung und zu Reinigungsprozessen der Meßspalt 13 erweiterbar ist, befindet sich die gesamte Traversiereinheit 7 mit dem Haltewinkel 6 und Porositätsmeßkopf 3 auf einem gemeinsamen in Y-Richtung verfahrbaren Schlittensytem 10, welches mittels eines Druckluftzylinders 8 oder elektromotorischer Verstellung auf und zu und zum Endanschlag 9 positioniert werden kann. Im aufgefahrenen Zustand erreicht der Meßspalt 13 das Maß Y von z.B. 250 mm und im zugefahrenen Zustand von z.B. 5 mm.

Die Lichtquelleneinrichtung 2 auf der linken Bahnseite ist am Maschinenrahmen 12 befestigt und zur Materialbahn 1 fest fixiert. Innerhalb dieser Einrichtung 2 sind zwei über die gesamte Bahnbreite durchgehende Gleichlichtquellen 4 und 5 integriert. Diese können auch als hochfrequent betriebene Leuchtstofflampen, wie sie von der Fa. Nanosystems bekannt sind, ausgeführt sein. Auch mehrere einzelne oder zwei durchgehende Bogenlampen mit entsprechenden sphärischen Reflektorsystemen zur Weißlichtflächenausleuchtung der Fa. LOT sind einsetzbar. Lichtintensitätskonstanten von <3% sind nach dem derzeitigen Stand der Technik und für die erfinderische Ausführung durchaus akzeptabel.

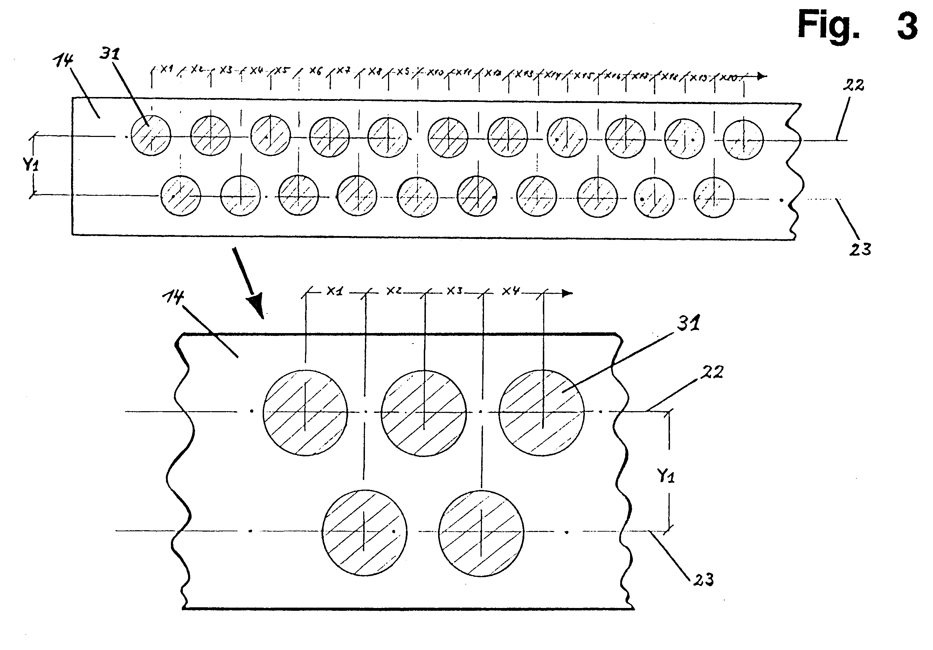

Im vorderen Gehäuseteil ist eine eingeschwärzte Lochblende 14 eingebaut, die quer zur Bahnlaufrichtung zwei Lochkreisreihen mit vielzahligen Einzellochkreisen und äquidistanten Abständen Xn untereinander enthält, wie dies in Fig. 3 zu sehen ist. Diese sind so ausgebildet, daß sich zwei optische Achsen 22 und 23 mit einem Mittenabstand von Y1 bilden und die Einzelkreisausnehmungen, die einen Durchmesser von bspw. 10 mm haben können, der oberen optischen Achsenreihe 22 gegenüber der unteren optischen Achsenreihe 23 querversetzt sind. Damit werden auf die im Meßspalt 13 durchlaufende Bahn 1 zwei Lichtkreisreihen 15 projiziert. Der optische Achsabstand Y1 ist hierbei mindestens dreimal größer als der Einzellochkreisdurchmesser 31.

Hierbei sind die Mittenabstände X1, X2, X3 usw. bis Xn der Einzellochkreise 31 beider Achsreihen 22 und 23 mindestens um den Faktor 1,5 größer, als die des Einzellochkreisdurchmessers 31. So kann bspw. bei einem Lochkreisdurchmesser 31 von 10 mm die Lochkreisreihe 22 und 23 aus jeweils 134 Einzellochkreisen bei einer Bahnbreite von 2000 mm bestehen.

Die Flächenausleuchtung soll möglichst homogen und mit sehr diffuser achsferner Weißlichtstrahlung im sichtbaren Wellenlängenbereich von 500-600 nm erfolgen, was mit der erfinderischen Ausführung in idealer Weise erreichbar ist.

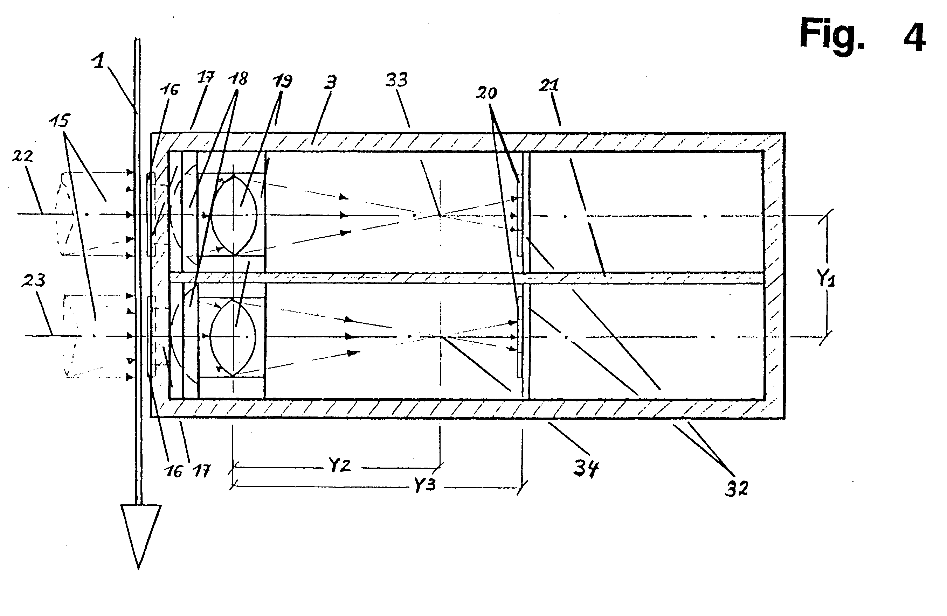

Der traversierende Porositätskopf 3 ist auf der rechten Bahnseite und parallel zu diesen beiden optischen Achsen 22 und 23 in Bahnquerrichtung geführt. In der Fig. 4 ist deren dualer Innenaufbau mit durchgehender Trennwand 21 ausgeführt und die beiden Plankonvexlinsen 18 und sich dahinter befindlichen Bikonvexlinsen 19 zu beiden Achsenlinien 22 und 23 angeordnet. Zwei Quarzglasfenster 16 mit leichtem Überstand schützen das Detektorsystem vor Verschmutzung nach innen. In der Gehäusewand sind für den Strahleneintritt zwei quadratische Ausnehmungen 17 von vorzugsweise 10 x 10 mm eingebracht und mittig zu den optischen Strahlenachsen 22 und 23 angeordnet.

Beide Bikonvexlinsen 19 haben ihre Brennpunkte 33 und 34 am rechten Endpunkt des Abstandes Y2. Die zu erfassenden Lichtanteile werden nicht im eigentlichen Brennpunkt 33 und 34, sondern hinter diesem im Abstand Y3 mit einem Fotodiodenarray 20 oder CCD-Zeilensensor detektiert. Alle optoelektronischen Bauteile einschließlich der Vorverstärker sind direkt auf die dahinter liegende Platine 32 plaziert. Die optischen Verhältnisse dieser erfinderischen Anordnung lassen sich im weiteren leicht erklären.

Die stark diffusierten Lichtkreisflächen 15 durchstrahlen die porositätsbehaftete und im Meßspalt 13 durchlaufende Bahn 1. Zum einen passieren die Lichtquanten die Poren bei einem optisch durchlässigen Material auf direktem Wege. Bei optisch sehr dichten und verfaserten Materialien gelangen die Lichtquanten durch Mehrfachumlenkungen als achsferne Streustrahlung durch diese hindurch. Mit der Quadratsausnehmung 17 und den dahinter befindlichen Plan- und Bikonvexlinsen 18 und 19 wird eine kissenförmige Abbildung aller eingefangenen Lichtanteile an den rechten Endpunkten von Y3, also außerhalb der Linsenbrennpunkte von 33, auf den beiden Fotodiodenarrays 20 oder CCD-Zeilensensoren projiziert.

Untersuchungen haben gezeigt, daß auf diese Weise ein großer Teil der für die eigentliche Porositätsmessung notwendigen Streustrahlungsanteile auch bei stark verfaserten und gasdurchlässigen Materialien eingefangen werden kann. Die Plankonvexlinsen 18 haben hierbei die Aufgabe, diese achsfernen und diffus durch das Material hindurchgetretenen Lichtquanten noch einzufangen und dem optischen Erfassungsbereich der Bikonvexlinsen 19 zuzuführen.

Da in der erfinderischen Ausgestaltung die beiden quer über die Bahn verlaufenden optischen Achsen 22 und 23 von der Lichtquelleneinrichtung 2 mit dem der Detektoreinrichtung geometrisch immer deckungsgleich sind, bildet sich im Kreuzungspunkt von X1, X2, X3 usw. bis Xn auf beiden mehrelementigen Fotodiodenarrays 20 oder auch einzusetzenden CCD-Bildwandlern die benannte Kissenform auf je einem Einzelemenent, dem sog. Primärelement, ab. Mit deren kontinuierlichen Verschiebung auf den beiden X-Achsen verändert die Kissenabbildung ihre Form und Intensitätsflächenverteilung aufgrund der Quadratblende 17 und belichtet dabei jeweils die links und rechts daneben liegenden Fotodiodenelemente, den sog. Sekundärelementen.

Durch eine entsprechend diesen optischen Verhältnissen ausgelegte elektrische, und mit sehr rauscharmen J-FET-Operationsverstärkern bestückte Schaltung, welche nicht gezeichnet und als technischer Hintergrund vorausgesetzt wird, ist die elektrische Signalaufbereitung und auch Weiterverarbeitung vorgesehen. Grundsätzlich ist die Schaltungskonfiguration so ausgeführt, daß eine Summation der verstärkten Sekundärelementespannungen und Spannungsdifferenzbildung zum Primärelement stattfindet. Für das Beispiel des Fotodiodenarrays gilt:

Ua = U1 - (U2 + U3 + Un)

Dabei bedeuten:
   U1      = Primärelementspannung
   U2      = Ausgangsspannung Sekundärelement 1
   U3      = Ausgangsspannung Sekundärelement 2
   Un      = Ausgangsspannung weiterer Sekundärelemente
   Ua      = Ausgangsspannung zur Porositätsgrößenbildung

In der erfinderischen Anordnung haben sich Fotodiodenarrays 20 mit Grenzfrequenzen bis zu 50 MHz bestens bewährt. Es können aber auch CCD-Zeilensensoren mit 256 oder 512 Einzelelementen eingesetzt werden, wobei dann allerdings mehrere Primär- und Sekundärpixel zu einer Gruppe zusammengefaßt sind. Auf der Basis des angeführten Berechnungsbeispiels kann eine gleichwertige Ausgangsgrößenbildung mit dem ausgegebenen Binärsignal erfolgen. Mit den direkt links und rechts neben der Bahn detektierten Lichtkreisen ist die optische Erfassung der tatsächlichen Lichtintensität nach den bekannten Methoden miteinbeziehbar.

Die duale Anordnung von zwei optischen Achsen 22 und 23 ist für die gegenständliche Erfindung deshalb gewählt worden, weil mit ihr bei der Quertraversierung des Detektors über die optische Achse eine nahezu geometrisch überlappende und damit zeitlich lückenlose Abdeckung der on-line Porositätserfassung über die gesamte Bahnbreite erzielbar ist. Während bei der moderaten Querverschiebung X die kissenförmige Form- sowie Intensitätsänderungsabbildung auf der ersten optischen Achse 22 die Sekundärelemente überfährt, bildet sich auf der geometrisch um den Betrag von Y1 versetzten zweiten optischen Achse 23 diese auf dem Primärelement ab.

Auf diese Weise werden mit der erfinderischen Vorrichtung alle Lochkreisflächen mit linearer X-Achsen-Traversiergeschwindigkeit abgefahren. An den links und rechts außerhalb der laufenden Bahn liegenden Traversierendpunkten erfolgt dann die Reversierung, so daß sich ein zyklischer Verfahrensablauf über die gesamte Bahnbreite einstellt.

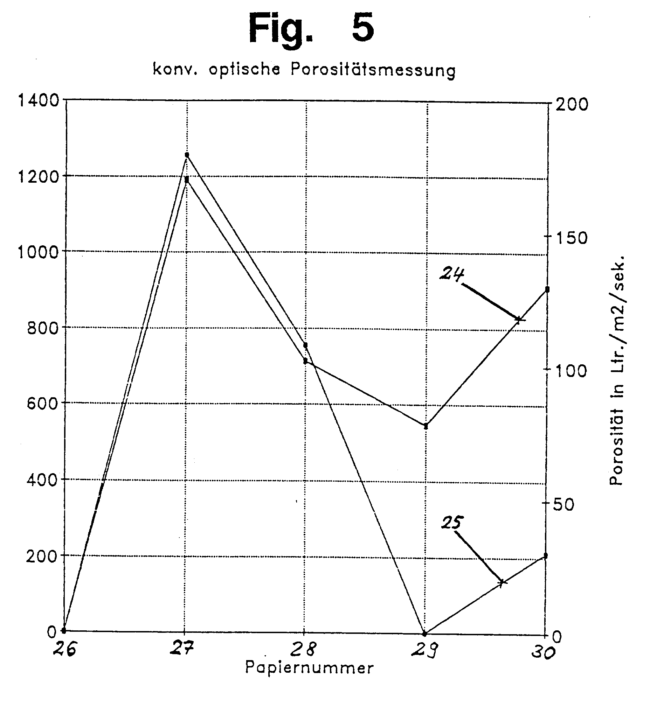

Mit den Diagrammen in Fig. 5 bis 9 werden diese optisch-geometrischen Zusammenhänge zur Porositätswertbildung näher erläutert, die in mehreren praktischen Versuchen mit verschiedenen Papieren ermittelt wurden.

In dem Diagramm unter Fig. 5 ist zum derzeitigen Stand der Technik die eingangs ausgeführte Problematik der optischen Porositätsmessung 25 bei optisch oder strukturell sehr dichten, aber dennoch mit bestimmten Luftdurchlässigkeiten 24 versehenen Materialien ausgeführt. Deutlich ist am Beispiel von verschiedenen Papieren zu erkennen, die hier auf der X-Achsendarstellung mit 26, 27, 28, 29 und 30 gekennzeichnet sind, daß die konventionellen optischen Meßmethoden bei den dichten Papieren 29 und 30 gänzlich versagen. Auf der linken Y-Achse ist der normierte optische Porositätswert und auf der rechten Y-Achse die tatsächliche Porosität in Ltr./m$^2$/sek. nach dem Frankgerät aufgetragen. Diese Ergebnisse werden durch verschiedene Fachpublikationen bestätigt.

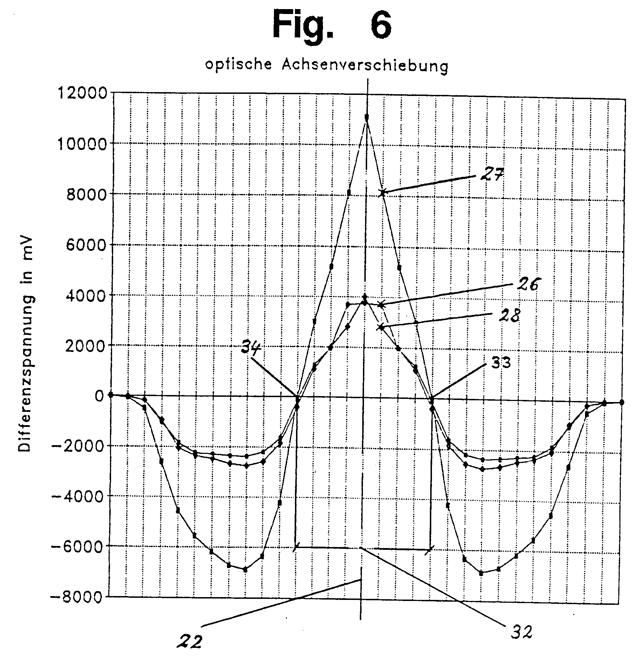

Fig. 6 zeigt die moderat dazu aufgenommene Lichtanteildetektion nach der zuvor beschriebenen Querverschiebungsmethode und elektrischer Spannungsgenerierung gemäß der o.g. Formel. Dabei entsteht ein mit den geometrischen Verhältnissen vorgegebenen und in dem Bahnmaterial enthaltenen Porositätsprofil ein charakteristischer Funktionsverlauf in hyperbolischer Form.

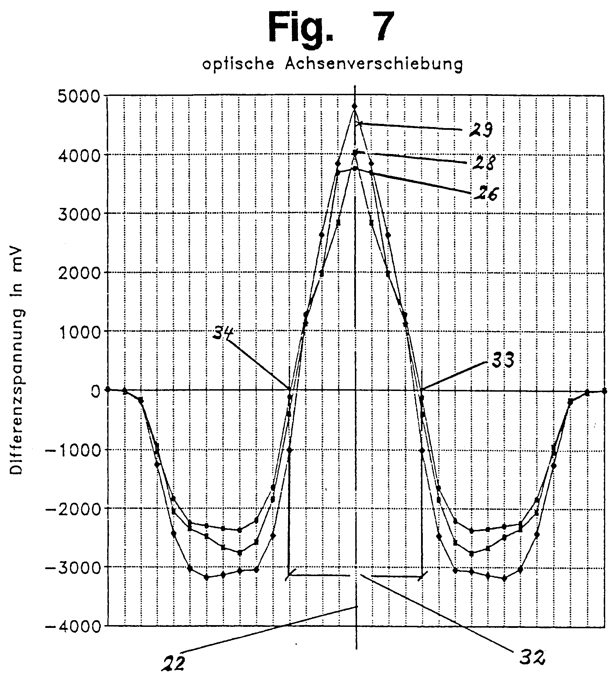

Die symmetrische Umkehrung der Spannungsverhältnisse auf der Y-Achse des Diagramms verdeutlicht in eindrucksvoller Weise die zuvor beschriebenen optischen Verhältnisse der Kissenformverlagerung und Intensitätsflächenverteilung bei der X-Achsenverschiebung. Signifikant deutlich sind hierbei die Spannungsdifferenzen zwischen den optisch sehr dichten, aber luftdurchlässigen Papieren 29 und 30 und dem luftundurchlässigen opaken Papier 26 in der Fig. 7 ausgeprägt, die auf die erhöhte Streustrahlungserfassung der erfinderischen Anordnung beruht.

In beiden Fig. 6 und 7 ist die X-Achsenverschiebung auch auf der Diagramm-X-Achse dargestellt und der Kreuzungspunkt X1, X2 oder X3 als 32 mittig eingetragen.

Ein weiteres kennzeichnendes Merkmal der praktischen Ausführung ist die durch die Umkehrungspunkte 33 und 34 definierte geometrische Breite 32, welche direkt durch den Mittenabstand des Primärelementes zum links und rechts daneben angeordneten Sekundärelement bestimmt wird.

Des weiteren steht die Funktionssteigerung in den Umkehrpunkten 33 und 34 im reziproken Verhältnis zur Separationsbreite der Primär- und Sekundärelemente oder deren zusammengefaßten Gruppen.

Weiterhin ist festzustellen, daß die nach oben verlaufende Funktion umso spitzwinkliger verläuft, je größer die Anzahl der Poren ist, die zur Flächen- oder auch Zonenporositätsbildung des zu messenden Materials beitragen. Damit enthält das erfinderische Verfahren ein weiteres fakultatives Merkmal zur Unterscheidung zwischen Grob- und Feinporigkeit sowie eine geometrische Positionserkennung nach Lage und Breite und deren Porositätsbestimmung von über die Bahnbreite verteilte und in Bahnlaufrichtung geführte Zonen- oder Linienperforationen.

Die nach dem erfinderischen Verfahren und deren Vorrichtung so detektierten und über die Bahnbreite verteilten Perforationszonen oder Linien sind dann in ihrer geometrischen Breite als direktes Abbild, gemäß der im Diagramm der Fig. 6 und 7 als Beispiel dargestellten hyperbolischen Funktion von Flächenperforationen, nach oben ausgeprägt wiederzufinden. Da das X-Achsen-Traversiersystem 7 zur Bahnkante und Bahnbreite eine absolute Fixposition hat, lassen sich aus deren Koordinaten die entsprechenden Einzelpositionen für die Perforationszonen- oder Linien mit genügend grober Auflösung von beispielsweise +/- 0,1 mm ausweisen.

Zur eigentlichen Porositätsmeßwertbildung ist dann unter Berücksichtigung des hyperbolischen Funktionsverlaufes, der Vorzeichen und dualer Substitution zu dem bspw. hier angeführten luftundurchlässigen und optisch opakem Papier 26 das Porositätsflächenintegral nach den bekannten mathematischen Methoden berechenbar.

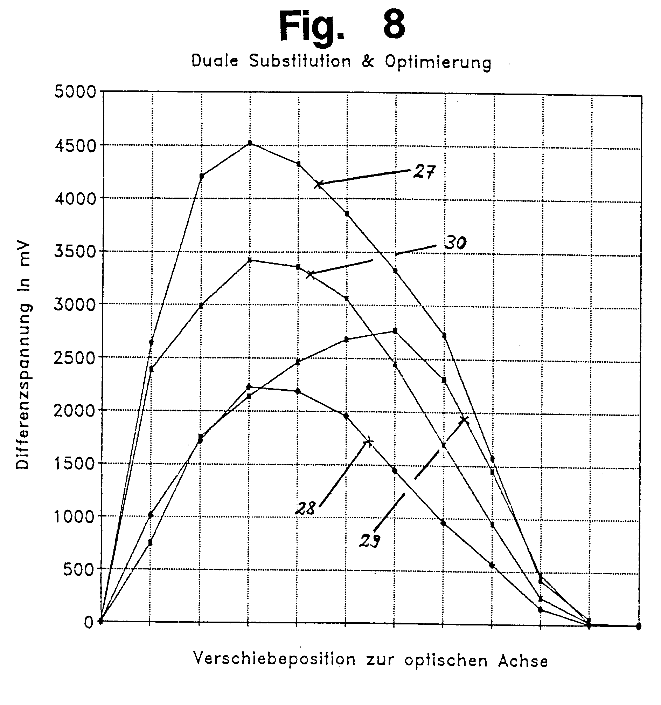

In Fig. 8 sind deren berechnete Porositätsflächenintegrale dargestellt. Der Verschiebeweg der X-Achse ist auch dort auf der Diagramm-X-Achse eingetragen.

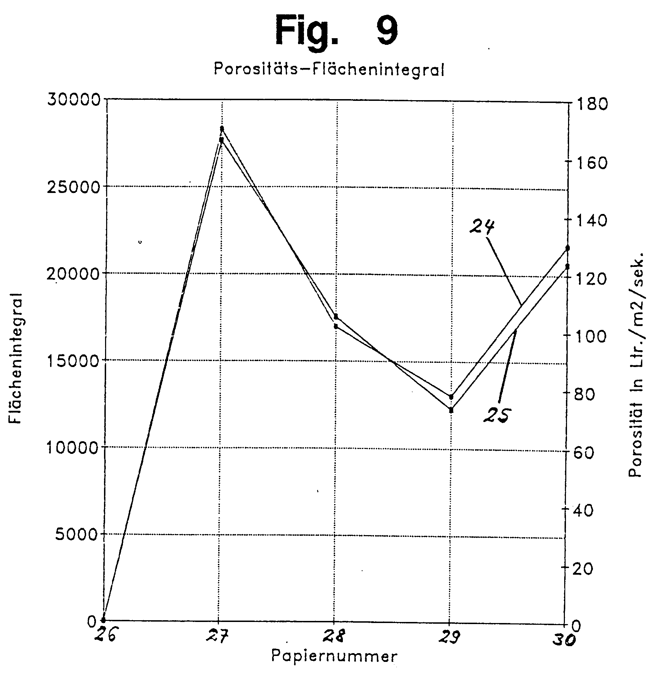

Deren numerische Auswertung und Konvertierung ist dann abschließend in dem Diagramm der Fig. 9 zu ersehen.

Hierbei wird deutlich, daß die nach dem erfinderischen Verfahren des Hauptanspruches 1 und Verfahren des Oberanspruches 11 optoelektronisch ermittelten Porositätswerte 25 mit dem der tatsächlichen Luftdurchlässigkeiten 24 im wesentlichen übereinstimmen und auch eine sehr genaue Zuordnung bei optisch dichten Bahnmaterialien ermöglichen.

**Patentansprüche**

1. Verfahren zur Messung der Porosität einer bewegten Bahn, die aus einem gas- oder flüssigkeitsdurchlässigen Material wie Zigaretten-, Mundstückbelag-, Kaffeefilter-, Teefilter- oder Verpackungspapiere, soft- oder harstructurs, veredelte Kunststoffolien, Vliese und Tissues bestehen können,
   **dadurch gekennzeichnet,** daß eine auf der einen Bahnseite stationär angeordnete Lichtquelleneinrichtung (2) zwei über die Bahnbreite durchgehende Reihen von vielzahligen Einzellichtkreisen (15) gleichzeitig auf die Bahn (1) projiziert, und auf der anderen Bahnseite ein über die gesamte Bahnbreite traversierender, optodualer Porositätsmeßkopf (3) die durch die laufende Bahn (1) hindurchtretenden elektromagnetischen Wellen des sichtbaren Bereiches jeden dieser Lichtkreise (15) beider optischen X-Achsen durch die Kombination von optischer Transmission- und Streulichtdetektion deren Lichtanteile nach geometrischer Lage und Betrag erfaßt und ein sich dem Porositätsprofil folgender, hyperbolischer Funktionsverlauf (26, 27, 28, 29) ausbildet, aus dem die Porosität (25) berechnet wird.

2. Verfahren nach Anspruch 1, dadurch gekennzeichnet, daß sich aus den aufgenommenen charakteristischen Funktionsverläufen (26, 27, 28, 29) der Porigkeitsgrad des Bahnmaterials und/oder die geometrische Lage und Breite von in Bahnlaufrichtung angeordneten Perforationszonen oder Linien bestimmen läßt.

3. Verfahren nach Anspruch 1 oder 2, dadurch gekennzeichnet, daß sich durch die über die Bahnbreite projizierten und in Bahnlaufrichtung geometrisch versetzten Einzellichtkreise (15) und deren zyklischer Abtastung mit dem Traversierprozeß eine überlappende Porositätsdetektion der gesamten Bahnbreite ergibt, daß ggf. die beiden quer über die Bahn (1) verlaufenden und in Bahnlaufrichtung um das Maß Y1 räumlich versetzten optischen Achsen (22, 23) der feststehenden Lichtquellenvorrichtung (2) mit den dualen X-Achsen des traversierenden Porositätsmeßkopfes (3) immer deckungsgleich sind und daß ggf. beim Traversierzyklus der Porositätsmeßkopf (3) kontinuierlich und linear verfahren wird und während der Porositätsmessung nicht auf den senkrechten Achskreuzungspunkten X1, X2, X3 usw. bis Xn der einzelnen Lichtkreisflächen (15) verweilt.

4. Verfahren nach einem der Ansprüche 1 bis 3, dadurch gekennzeichnet, daß die optische Detektion aller Lichtanteile außerhalb der Linsenbrennpunkte und rücklings, also am rechten Endpunkt des Abstandes Y3, auf den Fotoelementen erfolgt und daß sich ggf. durch die im vorderen Strahlengang befindliche Quadratausnehmung (17) eine kissenförmige Abbildung auf die hinter dem Linsensystem befindlichen Detektorelemente einstellt.

5. Verfahren nach einem der Ansprüche 1 bis 4, dadurch gekennzeichnet, daß die Umkehrpunkte (33, 34) der charakteristischen Funktionsverläufe (26, 27, 28, 29) durch die geometrischen Mittenabstände der Primär- und Sekundärdetektorelemente oder deren Gruppen bestimmt werden und daß ggf. die gesamte Traversiereinrichtung (7) mit dem aufgebauten Porositätsmeßkopf (3) über ein Schlittensystem (10) mit dem Verfahrweg Y auf und zum Meßspalt (13) zufahrbar ist.

6. Vorrichtung zur Durchführung des Verfahrens nach einem der Ansprüche 1 bis 5, wobei auf der einen Bahnseite mit der stationär angeordneten Lichtquelleneinrichtung (2) zwei über die Bahnbreite verlaufende Lichtkreisreihen (15) auf die laufende Bahn projiziert werden, und parallel dazu auf der anderen Bahnseite der traversierend geführte, optoduale Porositätsmeßkopf (3) diese detektiert, **dadurch gekennzeichnet,** daß die beiden Lichtkreisreihen (15) mit einer gemeinsamen Lochblende (14) erzeugt werden.

7. Vorrichtung nach Anspruch 6, dadurch gekennzeichnet, daß die Lichtquelle (2) aus zwei separaten, hochfrequent getakteten Leuchtstofflampen (4, 5) besteht oder aus mehreren Einzellampensystemen und sphärischen Spiegeln besteht.

8. Vorrichtung nach Anspruch 6 oder 7, dadurch gekennzeichnet, daß der Porositätsmeßkopf (3) mit seinem X-Achsen-Traversiersystem (7) zur Bahneinführung auf einer Schlittenführung (10) aufgebaut ist und pneumatisch oder elektromotorisch über den Verfahrweg Y bewegbar ist und daß ggf. der über die Bahnbreite traversierende Porositätsmeßkopf (3) aus zwei identischen Kammern, einer Zwischenwand (21) und zwei gleichen optischen Anordnungen besteht.

9. Vorrichtung nach einem der Ansprüche 6 bis 8, dadurch gekennzeichnet, daß die beiden quer zur Bahnlaufrichtung verlaufenden optischen X-Achsen (22, 23) einen geometrischen Abstand von Y1 zueinander aufweisen, der mindestens um den Faktor 3 größer ist, als der des Einzellochkreisdurchmessers (31), daß ggf. die Mittenabstände X1, X2, X3 usw. bis Xn der Einzellochkreise beider optischen Achsen (22, 23) mindestens um den Faktor 1,5 größer sind, als die des Einzellochkreisdurchmessers (31), daß ggf. in den Kreuzungspunkten beider quer durchlaufenden, optischen X-Achsen (22, 23) und deren senkrecht dazu stehenden Y-Achsen mit X1, X2, X3 usw. bis Xn die belichteten Detektoren (20) das Primärelement oder eine Gruppe hierfür bilden und daß ggf. die links und rechts neben diesen Kreuzungspunkten liegenden Sekundärelemente beider Detektoren (20) zu Gruppen zusammengefaßt sind.

10. Vorrichtung nach einem der Ansprüche 6 bis 9, dadurch gekennzeichnet, daß die beiden lichtempfindlichen Detektoren (20) aus Fotodiodenarrays bestehen oder CCD-Zeilensensoren sind und daß ggf. der Porositätsmeßkopf (20) am Strahleneingang für beide Kammern je eine quadratische Ausnehmung (17) aufweist.

EP 0 608 544 A2

**Fig. 1**

**Fig. 2**

EP 0 608 544 A2

Fig. 3

Fig. 4

# Fig. 5

konv. optische Porositätsmessung

# Fig. 6

optische Achsenverschiebung

# Fig. 7

optische Achsenverschiebung

# Fig. 8

Duale Substitution & Optimierung

# Fig. 9

Porosităts—Flächenintegral